# EUROPÄISCHE PATENTSCHRIFT

(11) **EP 4 230 989 B1**
(45) Veröffentlichungstag und Bekanntmachung des Hinweises auf die Patenterteilung: **09.09.2026**
(21) Anmeldenummer: 23150823.5
(22) Anmeldetag: 09.01.2023
(51) Int. Cl.: G01M 99/00

(54) **VORRICHTUNG ZUM PRÜFEN EINES HAUSHALTSGERÄTS MITTELS EINES TESTS UND PRÜFVERFAHREN ZUM TESTEN EINES HAUSHALTSGERÄTS**
DEVICE FOR TESTING A DOMESTIC APPLIANCE BY MEANS OF A TEST AND TESTING METHOD FOR TESTING A DOMESTIC APPLIANCE
DISPOSITIF DE CONTRÔLE D'UN APPAREIL MÉNAGER AU MOYEN D'UN TEST ET PROCÉDÉ DE CONTRÔLE POUR TESTER UN APPAREIL MÉNAGER

(30) Priorität: 16.02.2022 DE 102022103680
(43) Veröffentlichungstag der Anmeldung: 23.08.2023
(73) Patentinhaber: JURA ELEKTROAPPARATE AG, 4626 Niederbuchsiten (CH)
(72) Erfinder: Probst, Emanuel, 8049 Zürich (CH)
(74) Vertreter: Mertzlufft-Paufler, Cornelius

(56) Entgegenhaltungen:
- WO-A1-2009/140183
- WO-A1-2011/135479
- CN-B- 102 680 026
- CN-U- 209 117 373
- DE-A1- 102006 052 889

## Beschreibung

Die Erfindung betrifft eine Vorrichtung gemäß Anspruch 1 zum Prüfen eines Haushaltsgeräts mittels eines Tests, welcher mindestens eine stationäre Dockingstation, mindestens eine mobile Prüfeinheit sowie eine Steuereinheit zum Steuern oder Vorgeben des Tests umfasst.

Die Erfindung betrifft weiter ein Prüfverfahren gemäß Anspruch 12 zum Testen eines Haushaltsgeräts, wobei das Haushaltsgerät einem automatisierten Test unterzogen wird, der von einer Steuereinheit gesteuert oder zumindest vorgegeben wird, und/oder wobei sich hierzu das Haushaltsgerät auf einer mobilen Prüfeinheit befindet.

Aus der CN 102 680 026 B ist eine automatische Funktionstestvorrichtung für eine Kaffeemaschine bekannt, die unter anderem einen Wasserversorgungsmechanismus, einen Kaffeepod-Liefermechanismus, ein Pinhole-Ventil, ein Wasserablassventil, einen Durchflussmesser, einen Temperatursensor, einen Drucksensor und ein Steuersystem umfasst und die Steuerung von Wasserzufuhr und Kaffeepod-Einsetzung sowie die Aufnahme von Signalen aus Durchflussmesser, Temperatursensor und Drucksensor ermöglicht. Aus der WO 2009/140183 A1 ist ein System bekannt, bestehend aus einer Einheit mit einer polygonalen Basis mit mehreren Seiten, wobei eine Anzahl der mehreren Seiten eine Andockstation zum Verbinden mit einem Transportwagen für mobile Geräte umfasst, und einem Roboterarm mit einer stationären Basis, die auf oder in der polygonalen Basis positioniert und so konfiguriert ist, dass sie mit den Geräten auf jedem Transportwagen für mobile Geräte interagiert.

Der Erfindung liegt die Aufgabe zugrunde, die insbesondere gleichzeitige Prüfung mehrerer Haushaltsgeräte zu vereinfachen.

Zur Lösung der genannten Aufgabe sind erfindungsgemäß die Merkmale des Anspruchs 1 vorgesehen. Insbesondere wird somit zur Lösung der genannten Aufgabe bei Prüfständen der eingangs beschriebenen Art erfindungsgemäß vorgeschlagen, dass diese mindestens eine stationäre Dockingstation, mindestens eine mobile Prüfeinheit und eine Steuereinheit die zum Steuern oder Vorgeben des Tests eingerichtet ist, umfassen, wobei die mobile Prüfeinheit über mindestens eine an der Dockingstation ausgebildete Koppelstelle koppelbar ist, sodass der Test auf der mobilen Prüfeinheit an dem Haushaltsgerät durchführbar ist, wenn die mobile Prüfeinheit über die Koppelstelle an die Dockingstation angekoppelt ist.

Somit wird eine Testumgebung zur Verfügung gestellt, die weitgehend automatisierte Tests ermöglicht.

Hierbei ist erfindungsgemäß vorgesehen, dass der Test eine Funktion des Haushaltsgeräts ausführt, die einer typischen Gebrauchssituation des Haushaltsgeräts entspricht, unter Verbrauch eines Mediums wie beispielsweise Wasser, Milch und/oder Kaffee.

Somit kann der Test die Gebrauchssituation bei Endkunden simulieren. Der Test kann aber auch über die typische Gebrauchssituation hinaus gehen. Beispielsweise kann er in der Benutzung des Haushaltsgeräts in kurzen Abständen über mehrere Stunden bestehen.

Bei einer vorteilhaften Ausgestaltung kann vorgesehen sein, dass wenigstens zwei mobile Prüfeinheiten der Vorrichtung übereinstimmende Grundkörper aufweisen. Beispielsweise können die Grundkörper der wenigstens zwei mobilen Prüfeinheiten identisch sein. Die wenigstens zwei Prüfeinheiten können auch über gleichartige Fahrwerke, Koppeleinheiten oder Auffangbehälter verfügen.

Somit wird eine einfache Wartung der Prüfeinheiten ermöglicht.

Bei einer vorteilhaften Ausgestaltung kann vorgesehen sein, dass die Steuereinheit Teil der mobilen Prüfeinheit und/oder der Dockingstation ist.

Somit kann die Steuereinheit je nach Bedarf die gleiche Mobilität wie die Prüfeinheit aufweisen, oder als Teil der Dockingstation für mehrere Prüfeinheiten zuständig sein.

Mobile Prüfeinheit und Dockingstation können auch verschiedene Steuereinheiten umfassen. Beispielsweise kann eine zentrale Steuereinheit der Dockingstation mit einer Steuereinheit einer mobilen Prüfeinheit in Verbindung stehen und/oder in Verbindung bringbar sein.

Somit kann die zentrale Steuereinheit Prüfaufträge an die Steuereinheit einer mobilen Prüfeinheit übermitteln. Die Steuereinheit der mobilen Prüfeinheit kann dann beispielsweise den Test eigenständig durchführen. Somit kann der Datenverkehr zwischen zentraler Steuereinheit und den mobilen Prüfeinheiten reduziert werden.

Erfindungsgemäß ist vorgesehen, dass die mobile Prüfeinheit eine Tragevorrichtung zum Tragen des Haushaltsgeräts aufweist.

Somit kann das Haushaltsgerät ohne größeren Aufwand auf der mobilen Prüfeinheit platziert werden.

Bei einer vorteilhaften Ausgestaltung kann vorgesehen sein, dass die Vorrichtung verschiedene Prüfeinheiten, insbesondere mit auf unterschiedliche Haushaltsgeräte abgestimmten Tragevorrichtungen, umfasst, die jeweils über die mindestens eine Koppeleinheit mit der Dockingstation koppelbar sind.

Somit können unterschiedliche Haushaltsgeräte an derselben Dockingstation geprüft werden.

Bei einer besonders vorteilhaften Ausgestaltung kann vorgesehen sein, dass die verschiedenen Prüfeinheiten über mehrere gleichartig ausgestaltete Koppeleinheiten mit der Dockingstation koppelbar sind.

Somit können unterschiedliche Haushaltsgeräte mittels jeweils einer zugeordneten Prüfeinheit an der Dockingstation getestet werden.

Alternativ oder zusätzlich kann vorgesehen sein, dass die verschiedenen Prüfeinheiten unterschiedliche Tests ermöglichen können. Außerdem kann vorgesehen sein, dass eine momentan verfügbare Test-Funktionalität der Vorrichtung durch An- und Auskoppeln der mobilen Prüfeinheiten und/oder durch Austauschen der Prüfeinheiten bei Beibehaltung der Dockingstation einfach anpassbar ist.

Somit können unterschiedliche Funktionalitäten der Haushaltsgeräte an derselben Dockingstation geprüft werden.

Gemäß einer erfindungsgemäßen Ausgestaltung ist vorgesehen, dass die mobile Prüfeinheit in wenigstens zwei Freiheitsgraden beweglich ist. Beispielsweise kann die mobile Prüfeinheit in wenigstens drei Freiheitsgraden beweglich sein.

Somit können mehrere Prüfeinheiten unproblematisch an andere Koppeleinheiten verschoben oder ausgetauscht werden.

Alternativ oder zusätzlich kann hierbei vorgesehen sein, dass die mobile Prüfeinheit und/oder die Tragevorrichtung höhenverstellbar ist.

Somit ist die Prüfumgebung auf verschiedene zu prüfende Haushaltsgeräte anpassbar.

Gemäß einer weiteren erfindungsgemäßen Ausgestaltung ist alternativ oder zusätzlich zur vorangehend beschriebenen erfindungsgemäßen Ausgestaltung vorgesehen, dass die Vorrichtung einen Aktuator aufweist, der zum Betätigen eines Human Machine Interface am Haushaltsgerät eingerichtet ist. Das Human Machine Interface des Haushaltsgeräts bezeichnet den Teil des Haushaltsgeräts, mit dem ein Benutzer interagieren kann, beispielsweise um das Haushaltsgerät zu steuern. Das Human Machine Interface kann beispielsweise als berührungsempfindlicher Bildschirm realisiert sein. Beispielsweise kann ein Aktuatorfinger des Aktuators horizontal verfahrbar sein.

Somit kann das Human Machine Interface des Haushaltsgeräts angesteuert werden, um den Test möglichst nah an dem tatsächlichen Gebrauch des Geräts durch den Kunden auszurichten. Weiter ist von Vorteil, dass das Haushaltsgerät den Test in einer typischen Gebrauchsstellung, beispielsweise auf Füßen stehend, absolvieren kann.

Bei einer vorteilhaften Ausgestaltung kann vorgesehen sein, dass der Aktuator druckluftbetrieben ist. Beispielsweise kann die Steuereinheit zur Steuerung von Ventilen eingerichtet sein.

Somit kann die Steuereinheit den Aktuator ansteuern, indem die Steuereinheit die Ventile von Druckluftleitungen ansteuert. Beispielsweise kann Druckluft zentral und/oder über die Koppeleinheit bereitgestellt und zum Ansteuern der Aktuatoren verwendet werden. Somit können in den Aktuatoren eingebaute Motoren verzichtbar sein.

Gemäß einer weiteren erfindungsgemäßen Ausgestaltung ist alternativ oder zusätzlich zu den beiden vorangehend beschriebenen erfindungsgemäßen Ausgestaltungen vorgesehen, dass die Dockingstation und/oder die mobile Prüfeinheit den Test überwachende Sensoren umfassen, die von der Steuereinheit auslesbar sind.

Somit kann der Test elektronisch überwacht werden.

Bei einer vorteilhaften Ausgestaltung kann vorgesehen sein, dass die Steuereinheit dazu eingerichtet ist, das Haushaltsgerät automatisiert dem Test zu unterziehen, wenn die mobile Prüfeinheit mit der Koppeleinheit der Dockingstation verbunden ist.

Somit sind möglichst wenig Eingriffe in das Testverfahren durch Personal notwendig.

Hierbei kann vorgesehen sein, dass die Steuereinheit dazu automatisiert den Test beschreibende Metadaten, beispielsweise Sensordaten, Parameter des Tests, eine
Identifikationsinformation des Haushaltsgeräts und/oder
eine Information über eine zuständige Testperson dokumentiert.

Somit können Anforderungen an die Qualitätskontrolle berücksichtigt werden.

Ferner kann hierbei vorgesehen sein, dass die Steuereinheit während des Tests steuernd auf das Haushaltsgerät einwirkt beziehungsweise zugreift.

Somit ist weniger Personal zur Testdurchführung erforderlich. Von Vorteil ist weiter, dass die auszuführenden Testabläufe nicht im Haushaltsgerät festgelegt bzw. abrufbar sein müssen.

Hierbei kann auch vorgesehen sein, dass die Steuereinheit vor der Durchführung des Tests eine hierfür notwendige Prüfanweisung an die mobile Prüfeinheit und/oder das Haushaltsgerät überträgt. Dies kann beispielsweise über die über die Koppelstelle und/oder so erfolgen, dass das Haushaltsgerät den Test anhand der Prüfanweisung selbst ausführen kann.

Somit kann der Datenverkehr zwischen der Dockingstation und der mobilen Prüfeinheit bzw. dem Haushaltsgerät reduziert werden. Weiter ist von Vorteil, dass der Aktuator verzichtbar sein kann.

Bei einer vorteilhaften Ausgestaltung kann vorgesehen sein, dass die Koppelstelle, die vorzugsweise als eine Koppeleinheit ausgebildet ist, eine fluidische Schnittstelle ist.

Somit kann ein Medium wie beispielsweise Wasser oder Luft, zwischen der Dockingstation und der mobilen Prüfeinheit übermittelt werden.

Hierbei kann auch vorgesehen sein, dass die Koppelstelle eine mechanische Schnittstelle ist.

Somit kann eine relative Position zwischen der Dockingstation und der mobilen Prüfeinheit festgelegt werden.

Ferner kann hierbei vorgesehen sein, dass die Koppelstelle eine elektrische Schnittstelle ist.

Somit können elektrische Energie und/oder elektronische Daten und/oder elektrische Signale übergeben bzw. übermittelt werden.

Bei einer vorteilhaften Ausgestaltung kann vorgesehen sein, dass die fluidische Schnittstelle mittels eines Koppelelements der Koppelstelle der Docking-Station ausgebildet ist, und das Koppelelement als eine (beispielsweise selbstschließende) fluidische Anschlusskupplung ausgebildet ist.

Somit ist nach dem Abkoppeln einer mobilen Einheit unter Unterbrechung der fluidischen Schnittstelle ein Austreten des Mediums sicher vermeidbar.

Bei einer vorteilhaften Ausgestaltung kann vorgesehen sein, dass die Dockingstation mehrere Koppelstellen aufweist, die so voneinander beabstandet sind, dass wenigstens zwei, vorzugsweise wenigstens drei, mobile Einheiten, an die Dockingstation gleichzeitig koppelbar sind.

Somit können gleichzeitig mehrere Tests automatisiert durchgeführt werden.

Hierbei kann auch vorgesehen sein, die Abstände so zu wählen, dass zusätzliche mobile Funktionseinheiten der Vorrichtung direkt benachbart zu bereits an die Dockingstation gekoppelten Prüfeinheiten gefahren werden können.

Somit können die zusätzlichen mobilen Funktionseinheiten ein Medium an das Haushaltsgerät liefern oder von diesem empfangen sowie abkühlen oder erhitzen. Beispielsweise können so gekühlte fluidische Medien wie beispielsweise Milch, Wasser oder Luft vorgehalten oder empfangen werden. Die zusätzlichen mobilen Funktionseinheiten können beispielsweise auch mit Einrichtungen zum Warten der Vorrichtung ausgestattet sein.

Bei einer vorteilhaften Ausgestaltung kann vorgesehen sein, dass die mobile Prüfeinheit Versorgungs- und/oder Entsorgungsanschlüsse an wenigstens zwei, bevorzugt an wenigstens drei, Seiten umfasst.

Somit können für den Test notwendige Medien, beispielsweise mehrere Sorten von Kaffeebohnen unterschiedlicher Güte, zugeführt oder bei dem Test anfallende Medien wie beispielsweise aufgebrühter Kaffee, der Trester oder Spülwasser abgeführt werden.

Bei einer vorteilhaften Ausgestaltung kann vorgesehen sein, dass an der Unterseite einer mobilen Prüfeinheit eine Entsorgungsöffnung ausgebildet ist.

Somit kann eine einfache Entsorgung von während des Tests anfallender Abfälle, beispielsweise des Tresters, realisiert werden.

Bei einer vorteilhaften Ausgestaltung kann vorgesehen sein, dass die Entsorgungsöffnung im Verwendungszustand einer mobilen Prüfeinheit an der Dockingstation über einer Entsorgungsvorrichtung der Vorrichtung zu liegen kommt. Die Entsorgungsvorrichtung der Vorrichtung kann die einer Dockingstation sein.

Somit kann von der mobilen Prüfeinheit abgegebener Abfall an der Vorrichtung aufgenommen und beispielsweise abtransportiert werden.

Bei einer vorteilhaften Ausgestaltung kann vorgesehen sein, dass die Entsorgungsöffnung und/oder die Entsorgungsvorrichtung mit einem an einer mobilen Prüfeinheit und/oder einer Dockingstation ausgebildeten Verschlusselement bedeckbar sind.

Somit kann eine ungewollte Abgabe von Abfall oder eine Kontamination der Umgebung der Vorrichtung vermindert oder vermieden werden.

Zusätzlich kann vorgesehen sein, dass das Verschlusselement mittels einer Spannvorrichtung die Entsorgungsöffnung und/oder die Entsorgungsvorrichtung bedeckend gehalten wird und/oder selbstschließend ist.

Somit kann eine ungewollte Abgabe von Abfall oder eine Kontamination der Umgebung der Vorrichtung weiter vermindert oder vermieden werden. So kann beispielsweise die Gefahr eines versehentlichen Offenlassens der Entsorgungsöffnung oder der Entsorgungsvorrichtung verringert oder ausgeschlossen werden.

Bei einer vorteilhaften Ausgestaltung kann vorgesehen sein, dass das Verschlusselement ein Schieber ist.

Somit kann ein einfaches Öffnen und Schließen des Verschlusselements realisiert werden.

Bei einer vorteilhaften Ausgestaltung kann vorgesehen sein, dass ein an einer mobilen Prüfeinheit ausgebildetes Verschlusselement so mit einer Dockingstation, dass das Verschlusselement während des Andockens der mobilen Prüfeinheit an die Dockingstation geöffnet und/oder während des Abdockens der mobilen Prüfeinheit von der Dockingstation geschlossen wird.

Alternativ oder zusätzlich kann vorgesehen sein, dass ein an der Dockingstation ausgebildetes Verschlusselement so mit einer mobilen Prüfeinheit wirken kann, dass das Verschlusselement während des Andockens der mobilen Prüfeinheit an die Dockingstation geöffnet und/oder während des Abdockens der mobilen Prüfeinheit von der Dockingstation geschlossen wird.

Somit kann das Öffnen und Schließen des Verschlusselements weitgehend automatisiert erfolgen. Insbesondere können zusätzliche Arbeitsschritte durch Personal verringert oder vermieden werden.

Bei einer vorteilhaften Ausgestaltung kann vorgesehen sein, dass an oder in einer mobilen Prüfeinheit eine Entsorgungsleitung so angeordnet ist, dass ein Entsorgungsgut von einer Entsorgungsöffnung des Haushaltsgeräts zu einer Entsorgungsöffnung der mobilen Prüfeinheit transportiert werden kann. Hierbei kann alternativ oder zusätzlich vorgesehen sein, dass das Entsorgungsgut zu einer Entsorgungsvorrichtung der Vorrichtung transportiert werden kann. Die Entsorgungsvorrichtung der Vorrichtung kann hierbei die einer Dockingstation sein.

Somit kann eine Entsorgung des Entsorgungsgut an der mobilen Prüfeinheit vorbei und/oder durch diese hindurch erfolgen. Somit wird auch ermöglicht, dass verschiedene, auf verschiedene Haushaltsgeräte angepasste mobile Prüfeinheiten, an verschiedenen Stellen der mobilen Prüfeinheiten aufgenommene Entsorgungsgüter der Haushaltsgeräte zu gleichartig ausgestalteten Entsorgungsvorrichtungen der Vorrichtung transportieren können. Somit können gleichartig ausgestalte Entsorgungsvorrichtung der Vorrichtung über verschiedene Prüfeinheiten mit verschiedenen Haushaltsgeräten kompatibel sein.

Bei einer vorteilhaften Ausgestaltung kann vorgesehen sein, dass das Entsorgungsgut von einer Entsorgungsöffnung des Haushaltsgeräts zu einer Entsorgungsvorrichtung der Vorrichtung, insbesondere einer Dockingstation, schwerkraftvermittelt gelangt, insbesondere von der Entsorgungsvorrichtung aufgefangen wird. Die Entsorgungsvorrichtung der Vorrichtung kann hierbei die einer Dockingstation sein. Das Entsorgungsgut kann hierbei von der Entsorgungsvorrichtung aufgefangen werden.

Somit kann die Schwerkraft zum Transport des Entsorgungsgutes genutzt werden. Zusätzlich Fördereinrichtungen wie Pumpen oder Förderbänder können verzichtbar sein.

Bei einer vorteilhaften Ausgestaltung kann vorgesehen sein, dass die Entsorgungsleitung unterbrechbar ist. Zusätzlich kann vorgesehen sein, dass an der Unterbrechungsstelle aufgefangenes Entsorgungsgut aus dem von der Entsorgungsleitung eingenommenen Bereich verfahrbar ist. Dies kann mittels einer Schub- und/oder Schwenklade realisiert werden.

Es ist somit möglich, das Entsorgungsgut, beispielsweise Trester, zu weiteren Analysen zu entnehmen.

Bei einer vorteilhaften Ausgestaltung kann vorgesehen sein, dass die Steuereinheit einer mobilen Prüfeinheit abnehmbar ist. Zusätzlich kann vorgesehen sein, dass die mobile Prüfeinheit eine Aufnahme mit Führungsmitteln für die Steuereinheit aufweist.

Somit kann die Steuereinheit beispielsweise vor einer Reinigung der mobilen Prüfeinheit von dieser abgenommen werden, um eine Beschädigung der Steuereinheit zu vermeiden. Ein einfaches Montieren oder Demontieren der Prüfeinheit kann durch die Führungsmittel gewährleistet sein. Die Führungsmittel können beispielsweise Führungsschienen sein.

Allgemein ermöglicht es die Erfindung gemäß einem möglicherweise eigenständigen Aspekt von erfinderischer Qualität, dass die mobilen Prüfeinheiten - wobei beispielsweise zuvor empfindliche Auf- und/oder Einbauten entfernt werden können - in einer industriellen oder automatischen Waschstraße oder Waschanlage gewaschen werden, beispielsweise zwischen zwei Tests.

Bei einer vorteilhaften Ausgestaltung kann vorgesehen sein, dass die Aufnahme für die Steuereinheit so gestaltet ist, dass in der Aufnahme vorhandene Flüssigkeit aus dieser herausfließen kann. Die Aufnahme für die Steuereinheit kann beispielsweise nach unten hin geöffnet sein.

Somit kann bei oder nach einer Reinigung der mobilen Prüfeinheit in die Aufnahme für die Steuereinheit gelangtes Wasser abfließen. Außerdem kann im Havariefall in die Aufnahme gelangte Flüssigkeit schnell abgeführt werden, um Schäden an der Steuereinheit zu verringern oder zu vermeiden.

Bei einer vorteilhaften Ausgestaltung kann vorgesehen sein, dass die Vorrichtung in mehrere Aufnahmeräume unterteilt ist und jeder Aufnahmeraum über ein Abflussloch an seiner tiefsten Stelle verfügt.

Somit können beispielsweise Aufnahmeräume für verschiedene Einsatzelemente vorgesehen sein. Das Einsatzelement kann beispielsweise eine Steuereinheit sein. Die Aufnahmeräume können auch für Transformatoren oder Kühleinrichtungen vorgesehen sein. Ein Abfließen von Wasser bei oder nach einer Reinigung der mobilen Prüfeinheit kann durch die Abflusslöcher gewährleistet werden.

Bei einer vorteilhaften Ausgestaltung kann vorgesehen sein, dass eine bewegliche Einrichtung der mobilen Prüfeinheit feststellbar ist.

Somit können bewegliche Teile der mobilen Prüfeinheit beispielsweise vor einer Reinigung der mobilen Prüfeinheit festgestellt werden. Dies ist beispielsweise besonders vorteilhaft, wenn die mobile Prüfeinheit während der Reinigung gekippt wird.

Alternativ oder zusätzlich sind zur Lösung der genannten Aufgabe erfindungsgemäß die Merkmale des nebengeordneten, auf ein Prüfverfahren zum Testen eines Haushaltsgeräts, insbesondere eines Kaffeevollautomaten, gerichteten Anspruchs vorgesehen. Insbesondere wird somit zur Lösung der genannten Aufgabe bei Prüfverfahren eingangs beschriebener Art erfindungsgemäß vorgeschlagen, dass das Haushaltsgerät einem automatisierten Test unterzogen wird, der von einer Steuereinheit gesteuert oder zumindest vorgegeben wird. Das Testen des Haushaltsgeräts kann hierbei im Rahmen eines Dauertests über mehrere Stunden erfolgen. Ferner wird hierbei erfindungsgemäß eine Vorrichtung wie vorstehend beschrieben verwendet.

Somit wird der Personalaufwand für den Test reduziert.

Alternativ oder zusätzlich hierzu wird ferner vorgeschlagen, dass sich hierzu das Haushaltsgerät auf einer mobilen Prüfeinheit befindet und das Haushaltsgerät und/oder die mobile Prüfeinheit mit der Dockingstation reversibel gekoppelt wird und der Test ausgeführt wird, nachdem die Kopplung hergestellt ist.

Somit wird eine Testumgebung zur Verfügung gestellt, die weitgehend automatisierte Tests ermöglicht. Die Tests können beispielsweise Dauertests über mehrere Stunden sein.

Hierbei kann auch vorgesehen sein, dass die Steuereinheit Parameter des Tests anhand einer Identifikationsinformation automatisiert einstellt, die das zu testende Haushaltsgerät und/oder die für den Test verwendete mobile Prüfeinheit identifiziert. Somit können Anforderungen an die Qualitätskontrolle erfüllt werden.

Bei einer vorteilhaften Ausgestaltung kann vorgesehen sein, dass das Haushaltsgerät reversibel an die mobile Prüfeinheit und die mobile Prüfeinheit reversibel an die Dockingstation gekoppelt ist.

Somit kann eine Verbindung von der Dockingstation zum Haushaltsgerät hergestellt werden, wobei das Haushaltsgerät und die Dockingstation nicht aufeinander abgestimmt sein müssen.

Bei einer vorteilhaften Ausgestaltung kann vorgesehen sein, dass die Steuereinheit den Test automatisiert überwacht und/oder dokumentiert. Beispielsweise kann dies durch elektronisches Abspeichern von den Test beschreibenden Metadaten, wie Parametern des Tests, einer Identifikationsinformation des Haushaltsgeräts und/oder einer Information über eine zuständige Testperson geschehen. Somit können Anforderungen an die Qualitätskontrolle erfüllt werden.

Bei einer vorteilhaften Ausgestaltung kann vorgesehen sein, dass die Steuereinheit den Test steuert, indem sie steuernd auf das Haushaltsgerät einwirkt. Dies kann beispielsweise über eine Koppelstelle zwischen mobiler Prüfeinheit und Dockingstation vermittelt werden. Dies kann auch erfolgen, um eine für eine Gebrauchssituation typische Funktion des Haushaltsgeräts auszuführen.

Alternativ oder zusätzlich kann vorgesehen sein, dass die Steuereinheit den Test vorgibt, indem sie eine für die Durchführung des Tests notwendige Prüfanweisung an die mobile Prüfeinheit und/oder das Haushaltsgerät überträgt. Dies kann beispielsweise über eine Koppelstelle zwischen mobiler Prüfeinheit und Dockingstation vermittelt werden. Es kann auch so erfolgen, dass das Haushaltsgerät den Test und/oder die zu testenden Funktionen anhand der Prüfanweisung selbst ausführt.

Somit kann der Datenverkehr zwischen der Dockingstation und der mobilen Prüfeinheit bzw. dem Haushaltsgerät reduziert werden. Weiter ist von Vorteil, dass der Aktuator verzichtbar sein kann.

Bei einer vorteilhaften Ausgestaltung kann vorgesehen sein, dass ein noch nicht beendeter automatisierter Test nach dem Abkoppeln der mobilen Prüfeinheit von einer Koppelstelle der Dockingstation und dem Ankoppeln der mobilen Prüfeinheit an einer Koppelstelle der Dockingstation fortgesetzt wird. Dies kann automatisch und/oder unterbrechungsfrei erfolgen.

Somit können mobile Prüfeinheit während eines automatisierten Tests von einer Koppelstelle der Dockingstation abgekoppelt werden, um den Test später, nach dem Ankoppeln an derselben oder einer anderen Koppelstelle der Dockingstation fortzusetzen. Beispielsweise können laufende Tests so unterbrochen werden, um andere Tests vorzuziehen.

Bei einer vorteilhaften Ausgestaltung kann vorgesehen sein, dass ein Abkoppeln der mobilen Prüfeinheit von der Koppelstelle der Dockingstation durch die Steuereinheit erkannt wird, und daraufhin der automatisierte Test angehalten wird.

Somit kann ein manuelles Anhalten des Tests vermeidbar und der Personalaufwand reduziert sein.

Bei einer vorteilhaften Ausgestaltung kann vorgesehen sein, dass bei einem Anhalten des automatisierten Tests ein Abspeichern von den Test beschreibenden Metadaten erfolgt.

Somit kann ein Verlorengehen der Metadaten verringert oder vermieden werden. Außerdem wird ermöglicht, dass der Test später fortgesetzt werden kann und nicht von vorn gestartet werden muss.

Bei einer vorteilhaften Ausgestaltung kann vorgesehen sein, dass ein zuvor angehaltener automatisierter Test bei einem Ankoppeln der mobilen Prüfeinheit an eine Koppelstelle der Dockingstation fortgesetzt wird.

Somit muss ein zuvor angehaltener automatisierter Test nach einem Ankoppeln der mobilen Prüfeinheit an eine Koppelstelle der Dockingstation nicht manuell fortgesetzt werden. Der Personalaufwand wird somit reduziert.

Die Erfindung wird nun anhand von Ausführungsbeispielen näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt:
- Figur 1: eine erfindungsgemäße Vorrichtung mit zwei erfindungsgemäßen mobilen Prüfeinheiten im Verwendungszustand,
- Figur 2: eine Reihe von erfindungsgemäßen mobilen Prüfeinheiten,
- Figur 3: eine erfindungsgemäße mobile Prüfeinheit in einer Ansicht von vorn,
- Figur 4: eine erfindungsgemäße mobile Prüfeinheit in einer Ansicht von hinten,
- Figur 5: eine erfindungsgemäße mobile Prüfeinheit in einer Ansicht von unten,
- Figur 6: eine weitere erfindungsgemäße mobile Prüfeinheit in einer Ansicht von hinten,
- Figur 7: den unteren Bereich einer erfindungsgemäßen mobilen Prüfeinheit im Verwendungszustand an einer erfindungsgemäßen Dockingstation,
- Figur 8: den unteren Bereich einer erfindungsgemäßen mobilen Prüfeinheit bei Annäherung bzw. bei einem Wegfahren an bzw. von einer erfindungsgemäßen Dockingstation,
- Figur 9: eine Aufsicht auf eine erfindungsgemäße mobile Prüfeinheit bei abgenommener Tragevorrichtung,
- Figur 10: eine Aufsicht auf eine erfindungsgemäße mobile Prüfeinheit bei abgenommener Tragevorrichtung und ausgezogener Entsorgungsgutschublade.

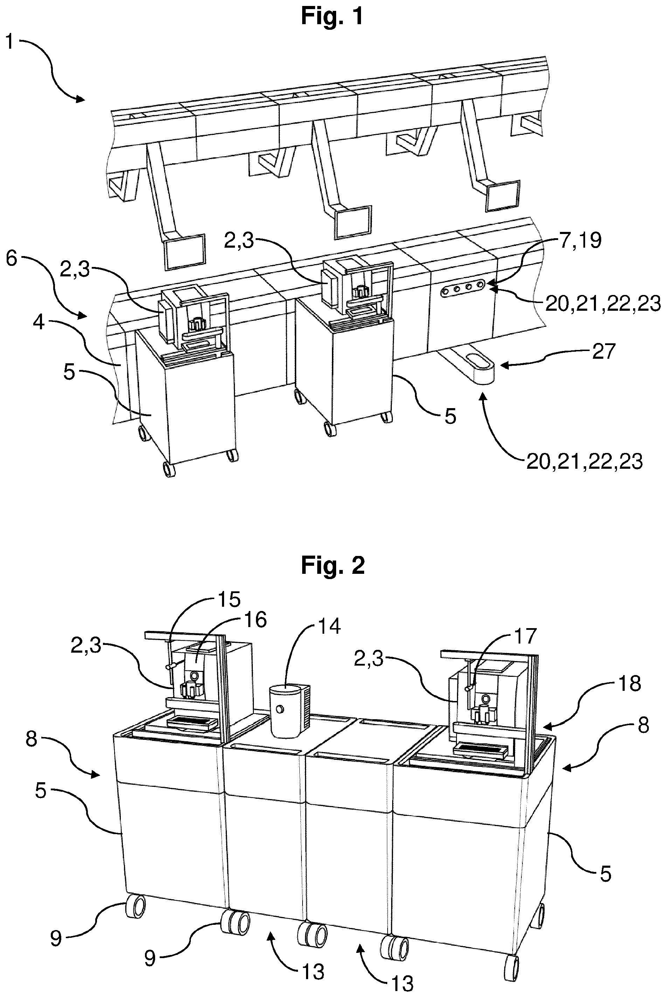

Figur 1 zeigt eine erfindungsgemäße Vorrichtung 1 zum Prüfen eines Haushaltsgeräts 2, hier eines Kaffeevollautomaten 3, mittels eines Tests. Die Vorrichtung 1 umfasst eine stationäre Dockingstation 4 und zwei mobile Prüfeinheiten 5. Ferner ist eine nicht näher gezeigte Steuereinheit 6 zum Steuern oder Vorgeben des Tests ausgebildet.

Die Prüfeinheiten 5 sind über jeweils eine an der Dockingstation 4 ausgebildete Koppelstelle 7 gekoppelt, wobei eine unbesetzte Koppelstelle 7 abgebildet ist. Die Dockingstation 4 weist mehrere Koppelstellen 7 auf, die so voneinander beabstandet sind, dass wenigstens drei mobile Prüfeinheiten 5 gleichzeitig koppelbar sind. Ferner können zusätzliche mobile Funktionseinheiten 13 direkt benachbart zu bereits an die Dockingstation 4 gekoppelten Prüfeinheiten 5 gefahren werden, insbesondere um so ein Medium an das Haushaltsgerät 2 zu liefern oder von diesem zu empfangen.

Der Test ist auf der mobilen Prüfeinheit 5 an dem Haushaltsgerät 2 durchführbar, wenn die mobile Prüfeinheit 5 über die Koppelstelle 7 an die Dockingstation 4 angekoppelt ist. Die Koppelstelle 7 ist die Stelle, an der eine mobile Prüfeinheit 5 mit einer Dockingstation 4 gekoppelt wird. Sie ist hier als Koppeleinheit 19 der Dockingstation 4 ausgebildet. Die Koppelstelle 7 kann auch eine Koppeleinheit 10 der mobilen Prüfeinheit 5 sein. Die Koppeleinheit 19 der Dockingstation 4 kann eine fluidische Schnittstelle 20 zur Übermittlung eines Mediums zwischen der Dockingstation 4 und der mobilen Prüfeinheit 5, eine mechanische Schnittstelle 21 zum Festlegen einer relativen Position zwischen der Dockingstation 4 und der mobilen Prüfeinheit 5 sowie eine elektrische Schnittstelle 22 zur Übergabe von elektrischer Energie und/oder zur Übermittlung elektronischer Daten und/oder elektrischer Signale umfassen. Hierbei kann eine Schnittstelle 20, 21, 22 auch mehrere der genannten Funktionen gleichzeitig erfüllen. Eine solche Schnittstelle kann ein Koppelelement 23 darstellen, welches die Verbindung zwischen Dockingstation 4 und mobiler Prüfeinheit 5 an der Koppelstelle 7 vermittelt.

Beide mobile Prüfeinheiten 5 weisen übereinstimmende Grundkörper 8 auf und verfügen über gleichartige Fahrwerke 9. Diese ermöglichen eine Bewegung der mobilen Prüfeinheit 5 in wenigstens zwei translatorischen Freiheitsgraden. In dieser Ansicht nicht erkennbar sind die als Koppeleinheit 10 ausgebildeten Koppelstellen 7 und die Auffangbehälter 11 der mobilen Prüfeinheiten 5. Die mobilen Prüfeinheiten verfügen ferner über Tragevorrichtungen 12 zum Tragen des Haushaltsgeräts 2.

Figur 2 zeigt zwei mobile Prüfeinheiten 5 sowie zwei mobile Funktionseinheiten 13. Die mobilen Prüfeinheiten 5 tragen jeweils ein Haushaltsgerät 2, hier einen Kaffeevollautomaten 3. Eine mobile Funktionseinheit 13 trägt ein weiteres Haushaltsgerät 2, hier einen Milchbehälter 14. Die mobile Prüfeinheit 5 weist einen Aktuator 15 auf, der zum Betätigen eines Human Machine Interfaces 16 des Haushaltsgeräts 2 eingerichtet ist. Hierbei ist ein Aktuatorfinger 17 des Aktuators 15 horizontal verfahrbar, um Elemente des Human Machine Interfaces 16 anzusteuern. Das Haushaltsgerät 2 absolviert den Test in einer typischen Gebrauchsstellung, auf nicht näher gezeigten Füßen 18 stehend.

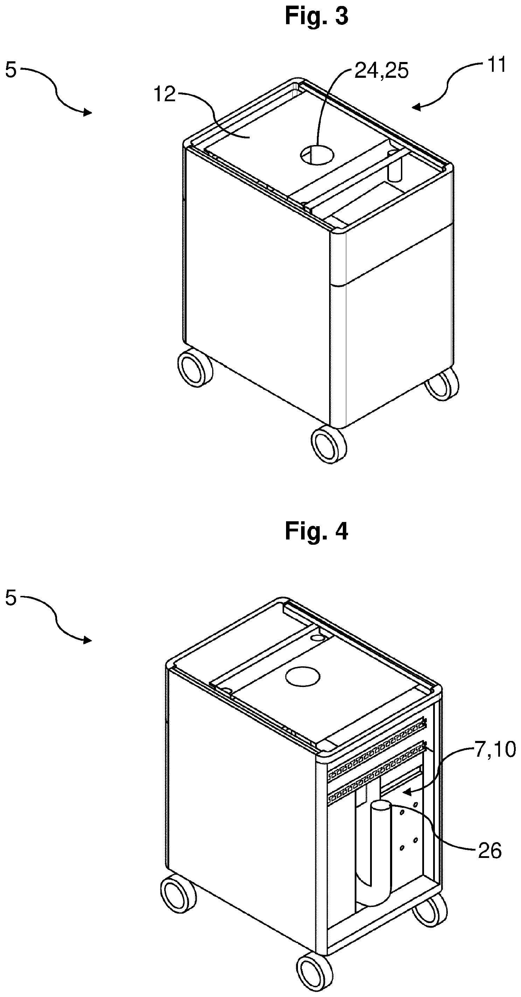

Figur 3 zeigt eine erfindungsgemäße mobile Prüfeinheit 5 in einer Ansicht von vorn. Die Prüfeinheit 5 steht auf ihrem Fahrwerk 9 und weist an der Oberseite eine Tragevorrichtung 12 zum Tragen eines hier nicht gezeigten Haushaltsgeräts 2 auf. An der Oberseite ist ein als Entsorgungsöffnung 24 ausgebildeter Entsorgungsanschluss 25 zur Aufnahme eines Entsorgungsgutes von dem Haushaltsgerät 2 ausgebildet.

Figur 4 zeigt die erfindungsgemäße mobile Prüfeinheit 5 aus Figur 3 in einer Ansicht von hinten. Im Vergleich zu Figur 3 ist zusätzlich ein Versorgungsanschluss 26 ausgebildet, durch welchen der mobilen Prüfeinheit 5 beispielsweise ein Fluid zugeführt werden kann.

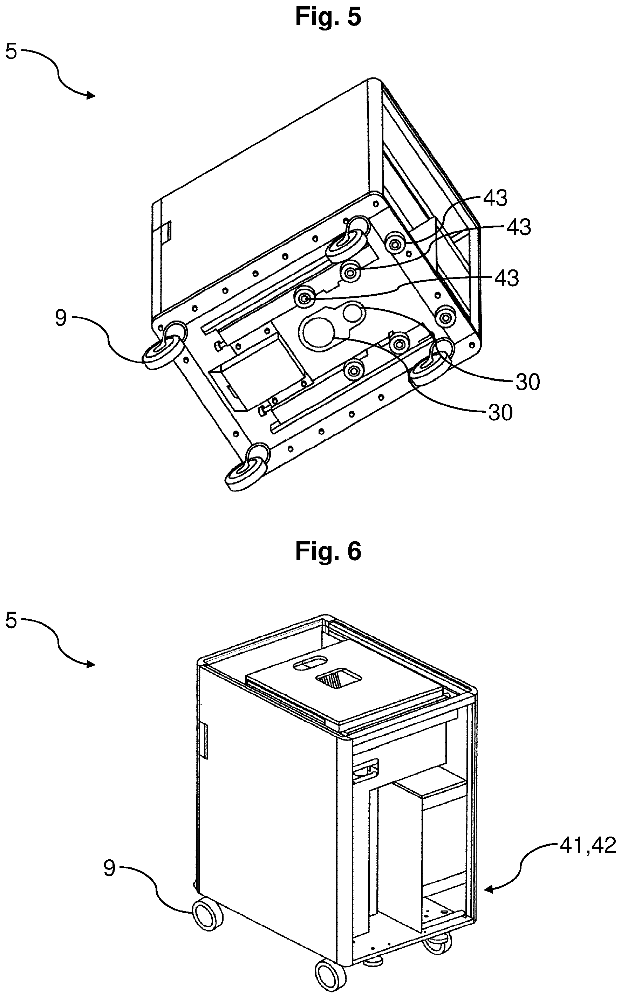

Figur 5 zeigt die erfindungsgemäße mobile Prüfeinheit 5 aus Figur 4 in einer Ansicht von unten. Hier ist zusätzlich eine Entsorgungsöffnung 30 an der Unterseite der mobilen Prüfeinheit 5 zu erkennen. Insgesamt verfügt die mobile Prüfeinheit 5 somit über Versorgungs- und/oder Entsorgungsanschlüsse 25, 26, 30 an drei Seiten.

Figur 6 zeigt eine weitere erfindungsgemäße mobile Prüfeinheit 5 in einer Ansicht von hinten. Hier ist eine Aufnahme 41 für die Steuereinheit 6 der mobilen Prüfeinheit 5 ausgebildet. Diese Aufnahme 41 weist Führungsmittel 42 für die Steuereinheit 6 auf, die somit einfach entnehm- und einsetzbar ist. Die Aufnahme 41 ist ferner so gestaltet, dass Flüssigkeit aus dieser herausfließen kann.

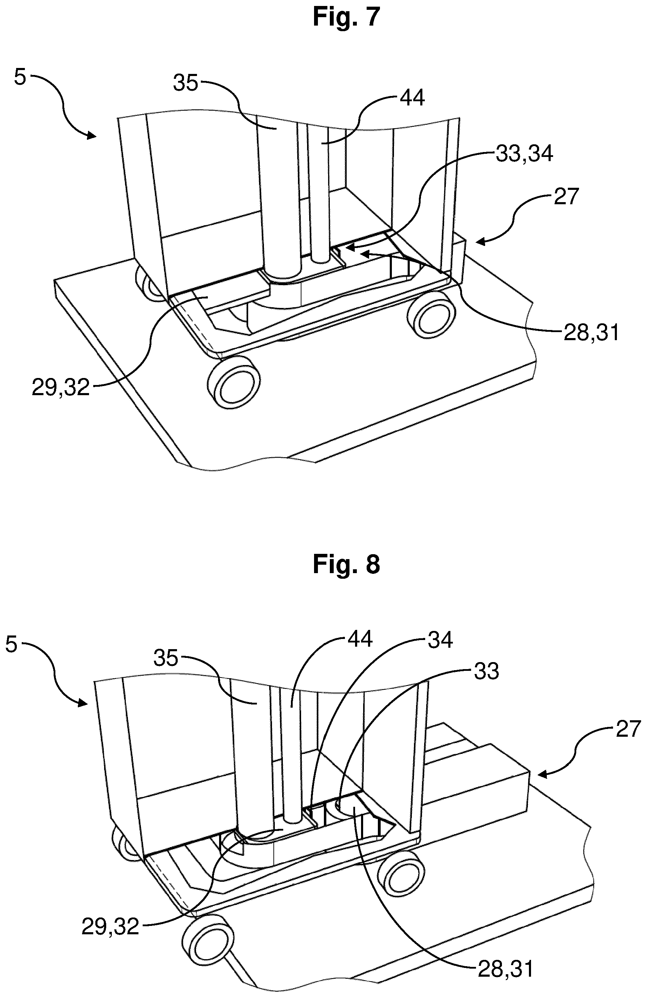

Figur 7 zeigt den unteren Bereich einer erfindungsgemäßen mobilen Prüfeinheit 5 im Verwendungszustand an einer erfindungsgemäßen Dockingstation 4. Es ist erkennbar, dass die Entsorgungsöffnung 30 an der Unterseite der mobilen Prüfeinheit 5 über einer Entsorgungsvorrichtung 27 der Dockingstation 4 zu liegen kommt. Die Entsorgungsöffnung 30 an der Unterseite der mobilen Prüfeinheit 5 und die Entsorgungsvorrichtung 27 der Dockingstation 4 sind jeweils mittels eines selbstschließenden Verschlusselements 28, 29 bedeckbar. Die Verschlusselemente 28, 29 sind jeweils ein Schieber 31, 32, der jeweils über einen Vorsprung 33, 34 verfügt. Dieser ermöglicht eine Öffnung der Verschlusselemente 28, 29 während des Andockens sowie ein Schließen der Verschlusselemente 28, 29 während des Abdockens der mobilen Prüfeinheit 5 an bzw. von der Dockingstation 4. Dies geschieht über ein Zusammenwirken der Verschlusselemente 28, 29.

In der mobilen Prüfeinheit 5 ist eine Entsorgungsleitung 35 so angeordnet, dass ein Entsorgungsgut von der Entsorgungsöffnung 24 an der Oberseite der mobilen Prüfeinheit 5 zu der Entsorgungsvorrichtung 27 der Dockingstation 4 transportiert werden kann. Dieser Transport erfolgt schwerkraftvermittelt und das Entsorgungsgut wird von der Entsorgungsvorrichtung 27 aufgefangen. Außerdem ist eine weitere Entsorgungsleitung 44 ausgebildet. Beispielsweise kann über eine Entsorgungsleitung 35 der Trester und über eine Entsorgungsleitung 44 Abwasser entsorgt werden.

Figur 8 zeigt den unteren Bereich einer erfindungsgemäßen mobilen Prüfeinheit 5 bei Annäherung bzw. bei einem Wegfahren an bzw. von einer erfindungsgemäßen Dockingstation 4. Hierbei sind die Entsorgungsöffnung 30 an der Unterseite der mobilen Prüfeinheit 5 und die Entsorgungsvorrichtung 27 der Dockingstation 4 durch die Schieber 31, 32 bedeckt. Bei weiterer Annäherung der mobilen Prüfeinheit 5 an die Dockingstation 4 beginnen die Vorsprünge 33, 34 miteinander zu wirken und die Schieber 31, 32 zu öffnen. Führungsrollen 43 unterstützen das Annähern bzw. Wegfahren der mobilen Prüfeinheit 5 an bzw. von der Dockingstation 4.

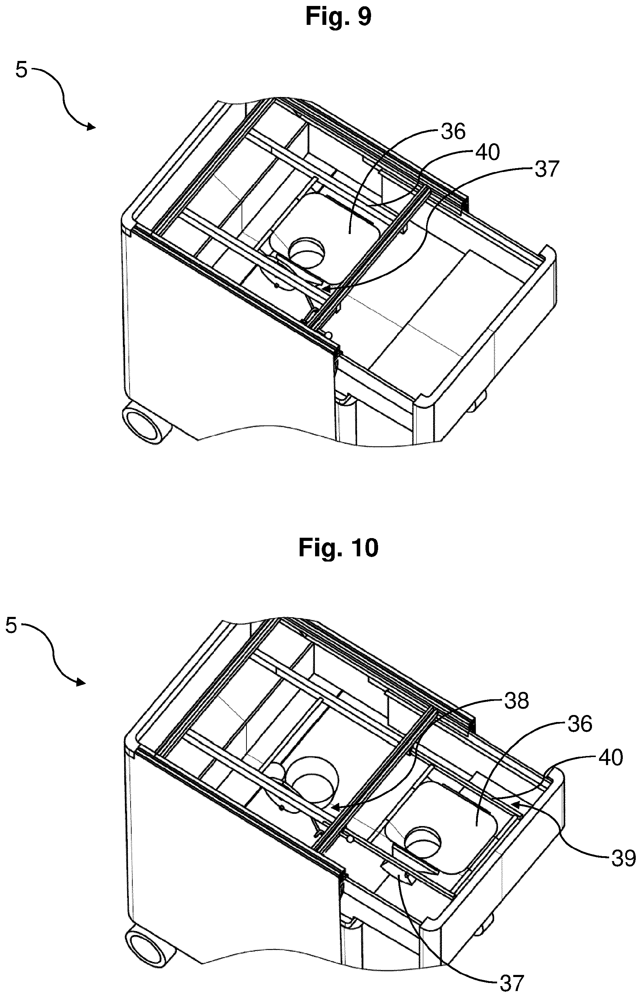

Figur 9 zeigt eine Aufsicht auf eine erfindungsgemäße mobile Prüfeinheit 5 bei abgenommener Tragevorrichtung 12. Ein Entsorgungstrichter 36 befindet sich über der nicht näher gezeigten Entsorgungsleitung 35 und dient zum Auffangen und zur Weiterleitung des Entsorgungsgutes. Dieses wird in der Regel an der Unterseite des hier nicht gezeigten Haushaltsgeräts 2 abgegeben. Die Entsorgungsleitung 35 ist mittels eines Unterbrechers 37 unterbrechbar. Der Unterbrecher 37 kann in den von der Entsorgungsleitung 35 eingenommenen Bereich 38 rotiert werden, sodass die Entsorgungsleitung 35 unterbrochen wird. Der Entsorgungstrichter 36 und der Unterbrecher 37 sind in einem einer Entsorgungsgutschublade 39 entsprechenden Gestell 40 gelagert und aus dem von der Entsorgungsleitung 35 eingenommenen Bereich 38 verfahrbar.

Figur 10 eine Aufsicht auf eine erfindungsgemäße mobile Prüfeinheit 5 bei abgenommener Tragevorrichtung 12 und ausgezogener Entsorgungsgutschublade 39.

Es wird somit vorgeschlagen, einen Vorrichtung 1 zum Prüfen eines Haushaltsgeräts 2 mittels eines Tests bereitzustellen, wobei die Vorrichtung mindestens eine stationäre Dockingstation 4, mindestens eine mobile Prüfeinheit 5, und eine Steuereinheit 6, die zum Steuern oder Vorgeben des Tests eingerichtet ist, umfasst, und wobei die mobile Prüfeinheit 5 über mindestens eine an der Dockingstation 4 ausgebildete Koppelstelle 7 koppelbar ist, sodass der Test auf der mobilen Prüfeinheit 5 an dem Haushaltsgerät 2 durchführbar ist, wenn die mobile Prüfeinheit 5 über die Koppelstelle 7 an die Dockingstation 4 angekoppelt ist (Fig. 1).

### Bezugszeichenliste

- 1: Vorrichtung
- 2: Haushaltsgerät
- 3: Kaffeevollautomat
- 4: Dockingstation
- 5: mobile Prüfeinheit
- 6: Steuereinheit
- 7: Koppelstelle
- 8: Grundkörper
- 9: Fahrwerk
- 10: Koppeleinheit
- 11: Auffangbehälter
- 12: Tragevorrichtung
- 13: mobile Funktionseinheit
- 14: Milchbehälter
- 15: Aktuator
- 16: Human Machine Interface
- 17: Aktuatorfinger
- 18: Fuß
- 19: Koppeleinheit
- 20: fluidische Schnittstelle
- 21: mechanische Schnittstelle
- 22: elektrische Schnittstelle
- 23: Koppelelement
- 24: Entsorgungsöffnung
- 25: Entsorgungsanschluss
- 26: Versorgungsanschluss
- 27: Entsorgungsvorrichtung
- 28: Verschlusselement
- 29: Verschlusselement
- 30: Entsorgungsöffnung
- 31: Schieber
- 32: Schieber
- 33: Vorsprung
- 34: Vorsprung
- 35: Entsorgungsleitung
- 36: Entsorgungstrichter
- 37: Unterbrecher
- 38: Bereich
- 39: Entsorgungsschublade
- 40: Gestell
- 41: Aufnahme
- 42: Führungsmittel
- 43: Führungsrollen
- 44: Entsorgungsleitung

## Patentansprüche

1. **Vorrichtung (1) zum Prüfen eines Haushaltsgeräts (2),** insbesondere eines Kaffeevollautomaten (3), **mittels eines Tests,** umfassend
- eine Steuereinheit (6) die zum Steuern oder Vorgeben des Tests eingerichtet ist,
- wobei der Test eine Funktion des Haushaltsgeräts (2) ausführt, die einer typischen Gebrauchssituation des Haushaltsgeräts (2) entspricht, welche über mehrere Arbeitszyklen wiederholt werden kann, unter Verbrauch eines Mediums wie beispielsweise Wasser, Milch und/oder Kaffee,
- wobei die Vorrichtung (1) mindestens eine stationäre Dockingstation (4) und mindestens eine mobile Prüfeinheit (5) umfasst,
- wobei die mobile Prüfeinheit (5) über mindestens eine an der Dockingstation (4) ausgebildete Koppelstelle (7) koppelbar ist, sodass der Test auf der mobilen Prüfeinheit (5) an dem Haushaltsgerät (2) durchführbar ist, wenn die mobile Prüfeinheit (5) über die Koppelstelle (7) an die Dockingstation (4) angekoppelt ist,
- und wobei die mobile Prüfeinheit (5) eine Tragevorrichtung (12) zum Tragen des Haushaltsgeräts (2) aufweist,
- wobei die mobile Prüfeinheit (5) in wenigstens zwei vorzugsweise translatorischen Freiheitsgraden beweglich ist und/oder die mobile Prüfeinheit (5) und/oder die Tragevorrichtung (12) höhenverstellbar ist und/oder
- wobei die Vorrichtung (1) einen Aktuator (15) aufweist, der zum Betätigen eines Human Machine Interfaces (16) des Haushaltsgeräts (2) eingerichtet ist und/oder
- wobei die Dockingstation und/oder die mobile Prüfeinheit (5) den Test überwachende Sensoren umfassen, die von der Steuereinheit (6) auslesbar sind.

2. Vorrichtung (1) gemäß Anspruch 1,
- wobei wenigstens zwei mobile Prüfeinheiten (5) übereinstimmende Grundkörper aufweisen,
- insbesondere wobei die wenigstens zwei Prüfeinheiten (5) über gleichartige Fahrwerke (9), Koppeleinheiten (10) und/oder Auffangbehälter (11) verfügen,
und/oder
- wobei die Steuereinheit (6) Teil der mobilen Prüfeinheit (5) und/oder der Dockingstation (4) ist,
- insbesondere wobei eine zentrale Steuereinheit der Dockingstation (4) mit einer Steuereinheit (6) einer mobilen Prüfeinheit (5) in Verbindung steht und/oder in Verbindung bringbar ist.

3. Vorrichtung (1) gemäß einem der vorhergehenden Ansprüche, wobei die Vorrichtung (1) verschiedene Prüfeinheiten (5), insbesondere mit auf unterschiedliche Haushaltsgeräte (2) abgestimmten Tragevorrichtungen (12), umfasst, die jeweils über die mindestens eine Koppeleinheit (10),
- insbesondere über mehrere gleichartig ausgestaltete Koppeleinheiten (10),
mit der Dockingstation (4) koppelbar sind,
- insbesondere derart, dass unterschiedliche Haushaltsgeräte (2) mittels jeweils einer zugeordneten Prüfeinheit (5) an der Dockingstation (4) getestet werden können, vorzugsweise an jeder der gleichartig ausgestalteten Koppeleinheiten (10), und/oder wobei die die verschiedenen Prüfeinheiten (5) unterschiedliche Tests ermöglichen,
- insbesondere sodass eine momentan verfügbare Test-Funktionalität der Vorrichtung (1) durch An- und Auskoppeln der mobilen Prüfeinheiten (5) und/oder durch Austauschen der Prüfeinheiten (5) bei Beibehaltung der Dockingstation (4) einfach anpassbar ist,
und/oder wobei die mobile Prüfeinheit (5) Versorgungs- und/oder Entsorgungsanschlüsse (25, 26) an wenigstens zwei, bevorzugt an wenigstens drei, Seiten umfasst.

4. Vorrichtung (1) gemäß einem der vorhergehenden Ansprüche,
- wobei ein Aktuatorfinger (17) des Aktuators (15) insbesondere horizontal verfahrbar ist, um Elemente des Human Machine Interfaces (16) anzusteuern, insbesondere sodass das Haushaltsgerät (2) in einer typischen Gebrauchsstellung, insbesondere auf Füßen stehend, den Test absolviert.

5. Vorrichtung (1) gemäß einem der vorhergehenden Ansprüche, **dadurch gekennzeichnet,**
- **dass** der Aktuator (15) druckluftbetrieben ist, vorzugsweise wobei die Steuereinheit (6) zur Steuerung von Ventilen eingerichtet ist,
und/oder
- **dass** an der Unterseite einer mobilen Prüfeinheit (5) eine Entsorgungsöffnung (30) ausgebildet ist und/oder
- **dass** die Entsorgungsöffnung (30) im Verwendungszustand einer mobilen Prüfeinheit (5) an der Dockingstation (4) über einer Entsorgungsvorrichtung (27) der Vorrichtung (1), insbesondere einer Dockingstation (4), zu liegen kommt.

6. Vorrichtung (1) gemäß einem der vorhergehenden Ansprüche, wobei die Steuereinheit (6) dazu eingerichtet ist, das Haushaltsgerät (2) automatisiert dem Test zu unterziehen, wenn die mobile Prüfeinheit (5) mit der Koppeleinheit (19) der Dockingstation (4) verbunden ist,
- vorzugsweise und dazu, automatisiert den Test beschreibende Metadaten, insbesondere
- Sensordaten und/oder
- Parameter des Tests und/oder
- eine Identifikationsinformation des Haushaltsgeräts (2) und/oder
- eine Information über eine zuständige Testperson zu dokumentieren,
und/oder
- wobei die Steuereinheit (6) während des Tests steuernd auf das Haushaltsgerät (2) einwirkt beziehungsweise zugreift
und/oder
- wobei die Steuereinheit (6) vor der Durchführung des Tests eine hierfür notwendige Prüfanweisung an die mobile Prüfeinheit (5) und/oder das Haushaltsgerät (2) überträgt, vorzugsweise über die Koppelstelle (7),
- insbesondere sodass das Haushaltsgerät (2) den Test anhand der Prüfanweisung selbst ausführen kann / ausführt.

7. Vorrichtung (1) gemäß einem der vorhergehenden Ansprüche,
- wobei die Koppelstelle (7), die vorzugsweise als eine Koppeleinheit (10, 19) ausgebildet ist,
- eine fluidische Schnittstelle (20) zur Übermittlung eines Mediums, wie beispielsweise Wasser oder Luft, zwischen der Dockingstation (4) und der mobilen Prüfeinheit (5) und/oder
- eine mechanische Schnittstelle (21) zum Festlegen einer relativen Position zwischen der Dockingstation (4) und der mobilen Prüfeinheit (5) und/oder
- eine elektrische Schnittstelle (22) zur Übergabe von elektrischer Energie und/oder zur Übermittlung elektronischer Daten und/oder elektrischer Signale aufweist.

8. Vorrichtung (1) gemäß dem vorhergehenden Anspruch,
- wobei die fluidische Schnittstelle (20) mittels eines Koppelelements (23) der Koppelstelle (7) der Docking-Station (4) ausgebildet ist, und das Koppelelement (23) als eine vorzugsweise selbstschließende fluidische Anschlusskupplung ausgebildet ist,
- insbesondere sodass nach dem Abkoppeln einer mobilen Einheit (5) unter Unterbrechung der fluidischen Schnittstelle (20) ein Austreten des Mediums sicher vermeidbar ist,
und/oder
wobei die Dockingstation (4) mehrere Koppelstellen (7) aufweist, die so voneinander beabstandet sind, dass wenigstens zwei, vorzugsweise wenigstens drei, mobile Einheiten (5), an die Dockingstation (4) gleichzeitig koppelbar sind, um so gleichzeitig mehrere Tests automatisiert durchführen zu können,
- insbesondere wobei die Abstände so gewählt sind, dass zusätzliche mobile Funktionseinheiten (13) der Vorrichtung (1),
- vorzugsweise die zum, insbesondere gekühlten, Vorhalten und/oder Aufnehmen fluidischer Medien wie beispielsweise Milch, Wasser oder Luft, eingerichtet oder mit Einrichtungen zum Warten der Vorrichtung (1) ausgestattet sind,
direkt benachbart zu bereits an die Dockingstation (4) gekoppelten Prüfeinheiten (5) gefahren werden können, insbesondere um so ein Medium an das Haushaltsgerät (2) zu liefern oder von diesem zu empfangen.

9. Vorrichtung (1) nach einem der vorhergehenden Ansprüche, **dadurch gekennzeichnet,**
- **dass** die Entsorgungsöffnung (30) und/oder die Entsorgungsvorrichtung (27) mit einem an einer mobilen Prüfeinheit (5) und/oder einer Dockingstation (4) ausgebildeten Verschlusselement (28, 29) bedeckbar sind,
- insbesondere wobei das Verschlusselement (28, 29) mittels einer Spannvorrichtung die Entsorgungsöffnung (30) und/oder die Entsorgungsvorrichtung (27) bedeckend gehalten wird und/oder selbstschließend ist,
und/oder
- **dass** das Verschlusselement (28, 29) ein Schieber (30, 31) ist,
und/oder
- **dass** ein an einer mobilen Prüfeinheit (5) ausgebildetes Verschlusselement (28, 29) so mit einer Dockingstation (4) und/oder ein an der Dockingstation (4) ausgebildetes Verschlusselement (28, 29) so mit der mobilen Prüfeinheit (5) wirken kann, dass das Verschlusselement (28, 29) während des Andockens der mobilen Prüfeinheit (5) an die Dockingstation (4) geöffnet und/oder während des Abdockens der mobilen Prüfeinheit (5) von der Dockingstation (4) geschlossen wird.

10. Vorrichtung (1) nach einem der vorhergehenden Ansprüche, **dadurch gekennzeichnet,**
- **dass** an oder in einer mobilen Prüfeinheit (5) eine Entsorgungsleitung (35) so angeordnet ist, dass ein Entsorgungsgut von einer Entsorgungsöffnung des Haushaltsgeräts (2) zu einer Entsorgungsöffnung (24, 30) der mobilen Prüfeinheit (5) und/oder einer Entsorgungsvorrichtung (27) der Vorrichtung (1), insbesondere einer Dockingstation (4), transportiert werden kann,
und/oder
- **dass** das Entsorgungsgut von einer Entsorgungsöffnung des Haushaltsgeräts (2) zu einer Entsorgungsvorrichtung (27) der Vorrichtung (1), insbesondere einer Dockingstation (4), schwerkraftvermittelt gelangt, insbesondere von der Entsorgungsvorrichtung (27) aufgefangen wird,
und/oder
- **dass** die Entsorgungsleitung (35) unterbrechbar ist,
- insbesondere wobei an der Unterbrechungsstelle aufgefangenes Entsorgungsgut aus dem von der Entsorgungsleitung (35) eingenommenen Bereich (38) verfahrbar ist, vorzugsweise mit einer Schub- und/oder Schwenklade (39).

11. Vorrichtung (1) nach einem der vorhergehenden Ansprüche, **dadurch gekennzeichnet,**
- **dass** die Steuereinheit (6) einer mobilen Prüfeinheit (5) abnehmbar ist,
- insbesondere wobei die mobile Prüfeinheit (5) eine Aufnahme (41) mit Führungsmitteln (42) für die Steuereinheit (6) aufweist,
und/oder
- **dass** die Aufnahme (41) für die Steuereinheit (6) so gestaltet ist, insbesondere nach unten hin geöffnet ist, dass in der Aufnahme (41) vorhandene Flüssigkeit aus dieser herausfließen kann,
und/oder
- **dass** die Vorrichtung (1) in mehrere Aufnahmeräume unterteilt ist und jeder Aufnahmeraum über ein Abflussloch an seiner tiefsten Stelle verfügt,
und/oder
- **dass** eine bewegliche Einrichtung der mobilen Prüfeinheit (5) feststellbar ist.

12. Prüfverfahren zum Testen eines Haushaltsgeräts (2),
- insbesondere eines Kaffeevollautomaten (3),
- vorzugsweise im Rahmen eines Dauertests über längere Zeit,
unter Verwendung einer Vorrichtung (1) nach einem der vorhergehenden Ansprüche,
- wobei das Haushaltsgerät (2) einem automatisierten Test unterzogen wird, der von einer Steuereinheit (6) gesteuert oder zumindest vorgegeben wird,
und/oder
- wobei sich das Haushaltsgerät (2) zu dem oder einem automatisierten Test auf einer mobilen Prüfeinheit (5) befindet und das Haushaltsgerät (2) und/oder die mobile Prüfeinheit mit der Dockingstation (4) reversibel gekoppelt wird und der Test ausgeführt wird, nachdem die Kopplung hergestellt ist,
- vorzugsweise wobei die Steuereinheit (6) Parameter des Tests anhand einer Identifikationsinformation automatisiert einstellt, die das zu testende Haushaltsgerät (2) und/oder die für den Test verwendete mobile Prüfeinheit (5) identifiziert, und/oder
- wobei das Haushaltsgerät (2) reversibel an die mobile Prüfeinheit (5) und die mobile Prüfeinheit (5) reversibel an die Dockingstation (4) gekoppelt ist.

13. Prüfverfahren gemäß Anspruch 12,
- wobei die Steuereinheit (6) den Test automatisiert überwacht und/oder dokumentiert,
- vorzugsweise durch elektronisches Abspeichern von den Test beschreibenden Metadaten, insbesondere
- Parametern des Tests und/oder
- einer Identifikationsinformation des Haushaltsgeräts (2) und/oder
- einer Information über eine zuständige Testperson
und/oder
- wobei die Steuereinheit (6) den Test
- steuert, indem die Steuereinheit (6),
- vorzugsweise vermittelt über eine Koppelstelle (7) zwischen mobiler Prüfeinheit (5) und Dockingstation (4),
steuernd auf das Haushaltsgerät (2) einwirkt,
- insbesondere um eine für eine Gebrauchssituation typische Funktion des Haushaltsgeräts (2) auszuführen, und/oder
- vorgibt, indem die Steuereinheit (6),
- vorzugsweise vermittelt über eine Koppelstelle (7) zwischen mobiler Prüfeinheit (5) und Dockingstation (4),
eine für die Durchführung des Tests notwendige Prüfanweisung an die mobile Prüfeinheit (5) und/oder das Haushaltsgerät (2) überträgt,
- insbesondere sodass das Haushaltsgerät (2) den Test und/oder die zu testenden Funktionen anhand der Prüfanweisung selbst ausführt.

14. Prüfverfahren gemäß Ansprüche 12 oder 13, **dadurch gekennzeichnet,**
- **dass** ein noch nicht beendeter automatisierter Test nach dem Abkoppeln der mobilen Prüfeinheit (5) von einer Koppelstelle (7) der Dockingstation (4) und dem Ankoppeln der mobilen Prüfeinheit (5) an einer Koppelstelle (7) der Dockingstation (4), insbesondere automatisch und/oder unterbrechungsfrei, fortgesetzt wird,
und/oder
- **dass** ein Abkoppeln der mobilen Prüfeinheit (5) von der Koppelstelle (7) der Dockingstation (4) durch die Steuereinheit (6) erkannt wird, und daraufhin der automatisierte Test angehalten wird.

15. Prüfverfahren gemäß Ansprüche 12-14, **dadurch gekennzeichnet,**
- **dass** bei einem Anhalten des automatisierten Tests ein Abspeichern von den Test beschreibenden Metadaten erfolgt, und/oder
- **dass** ein zuvor angehaltener automatisierter Test bei einem Ankoppeln der mobilen Prüfeinheit (5) an eine Koppelstelle (7) der Dockingstation (4) fortgesetzt wird.

## Claims

1. Device (1) for testing a household appliance (2), in particular a fully automatic coffee machine (3), by means of a test, comprising
- a control unit (6) configured to control or specify the test,
- wherein the test performs a function of the household appliance (2) that corresponds to a typical usage situation of the household appliance (2), which can be repeated over several operating cycles, while consuming a medium such as, for example, water, milk, and/or coffee,
- wherein the device (1) comprises at least one stationary docking station (4) and at least one mobile test unit (5),
- wherein the mobile test unit (5) can be coupled via at least one coupling point (7) formed on the docking station (4), such that the test can be performed on the mobile test unit (5) on the household appliance (2) when the mobile test unit (5) is coupled to the docking station (4) via the coupling point (7),
- and wherein the mobile test unit (5) comprises a carrying device (12) for carrying the household appliance (2),
- wherein the mobile test unit (5) is movable in at least two, preferably translational, degrees of freedom and/or the mobile test unit (5) and/or the carrying device (12) is height-adjustable and/or
- wherein the device (1) comprises an actuator (15) configured to operate a human-machine interface (16) of the household appliance (2) and/or
- wherein the docking station and/or the mobile test unit (5) comprise sensors monitoring the test, which can be read by the control unit (6).

2. Device (1) according to claim 1,
- wherein at least two mobile test units (5) have matching basic bodies,
- in particular wherein the at least two test units (5) are equipped with identical chassis (9), coupling units (10), and/or collection containers (11),
and/or
- wherein the control unit (6) is part of the mobile test unit (5) and/or the docking station (4),
- in particular wherein a central control unit of the docking station (4) is connected to and/or can be connected to a control unit (6) of a mobile test unit (5).

3. Device (1) according to one of the preceding claims, wherein the device (1) comprises various test units (5), in particular with carrying devices (12) adapted to different household appliances (2), which can each be coupled to the docking station (4) via the at least one coupling unit (10),
- in particular via multiple similarly configured coupling units (10),
- in particular such that different household appliances (2) can be tested at the docking station (4) using a respective assigned test unit (5), preferably at each of the similarly configured coupling units (10),
and/or wherein the various test units (5) enable different tests,
- in particular such that a currently available test functionality of the device (1) can be easily adapted by connecting and disconnecting the mobile test units (5) and/or by exchanging the test units (5) while retaining the docking station (4),
and/or wherein the mobile test unit (5) comprises supply and/or disposal connections (25, 26) on at least two, preferably at least three, sides.

4. Device (1) according to one of the preceding claims,
- wherein an actuator finger (17) of the actuator (15) is movable, in particular horizontally, to actuate elements of the human-machine interface (16), in particular so that the household appliance (2) completes the test in a typical operating position, in particular while standing on its feet.

5. Device (1) according to one of the preceding claims,
**characterized in that**
- the actuator (15) is pneumatically operated, preferably wherein the control unit (6) is configured to control valves,
and/or
- **in that** a disposal opening (30) is formed on the underside of a mobile test unit (5)
and/or
- **in that** the disposal opening (30), when the mobile test unit (5) is in use at the docking station (4), comes to rest above a disposal device (27) of the device (1), in particular a docking station (4).

6. Device (1) according to one of the preceding claims, wherein the control unit (6) is configured to automatically subject the household appliance (2) to the test when the mobile test unit (5) is connected to the coupling unit (19) of the docking station (4),
- preferably and configured to automatically document metadata describing the test, in particular
- sensor data and/or
- test parameters and/or
- identification information of the household appliance (2) and/or
- information about a responsible testing person,
and/or
- wherein the control unit (6) exerts a controlling influence on or accesses the household appliance (2) during the test
and/or
- wherein the control unit (6) transmits a test instruction necessary for this purpose to the mobile test unit (5) and/or the household appliance (2) prior to performing the test, preferably via the coupling point (7),
- in particular so that the household appliance (2) can carry out/does carry out the test itself based on the test instruction.

7. Device (1) according to one of the preceding claims,
- wherein the coupling point (7), which is preferably configured as a coupling unit (10, 19), comprises
- a fluidic interface (20) for transmitting a medium, such as water or air, between the docking station (4) and the mobile test unit (5), and/or
- a mechanical interface (21) for establishing a relative position between the docking station (4) and the mobile test unit (5), and/or
- an electrical interface (22) for transferring electrical energy and/or for transmitting electronic data and/or electrical signals.

8. Device (1) according to the preceding claim,
- wherein the fluidic interface (20) is formed by means of a coupling element (23) of the coupling point (7) of the docking station (4), and the coupling element (23) is designed as a preferably self-closing fluidic connection coupling,
- in particular such that after disconnecting a mobile unit (5) while interrupting the fluidic interface (20), leakage of the medium can be reliably prevented,
and/or
wherein the docking station (4) comprises multiple coupling points (7) spaced apart from one another such that at least two, preferably at least three, mobile units (5) can be coupled to the docking station (4) simultaneously, in order to perform multiple tests automatically at the same time,
- in particular wherein the distances are selected such that additional mobile functional units (13) of the device (1),
- preferably those configured for the, in particular cooled, storage and/or reception of fluid media such as milk, water, or air, or equipped with devices for maintaining the device (1),
can be moved directly adjacent to test units (5) already coupled to the docking station (4), in particular to supply a medium to the household appliance (2) or to receive it from it.

9. Device (1) according to one of the preceding claims, **characterized**
- **in that** the disposal opening (30) and/or the disposal device (27) can be covered by a closure element (28, 29) formed on a mobile test unit (5) and/or a docking station (4),
- in particular wherein the closure element (28, 29) is held in place to cover the disposal opening (30) and/or the disposal device (27) by means of a clamping device and/or is self-closing,
and/or
- **in that** the closure element (28, 29) is a slide (30, 31),
and/or
- **in that** a closure element (28, 29) formed on a mobile test unit (5) can interact with a docking station (4) and/or a closure element (28, 29) formed on the docking station (4) can interact with the mobile test unit (5) such that the closure element (28, 29) is opened during the docking of the mobile test unit (5) to the docking station (4) and/or is closed during the undocking of the mobile test unit (5) from the docking station (4).

10. Device (1) according to one of the preceding claims,
**characterized**
- **in that** a disposal line (35) is arranged on or in a mobile test unit (5) such that a disposal good can be transported from a disposal opening of the household appliance (2) to a disposal opening (24, 30) of the mobile test unit (5) and/or a disposal device (27) of the device (1), in particular a docking station (4),
and/or
**in that** the disposal good travels from a disposal opening of the household appliance (2) to a disposal device (27) of the device (1), in particular a docking station (4), by means of gravity, and in particular is collected by the disposal device (27),
and/or
- **in that** the disposal line (35) can be interrupted,
- in particular wherein disposal good collected at the point of interruption can be moved out of the area (38) occupied by the disposal line (35), preferably with a push and/or swivel drawer (39).

11. Device (1) according to one of the preceding claims, **characterized**
- **in that** the control unit (6) of a mobile test unit (5) is detachable,
- in particular wherein the mobile test unit (5) comprises a receptacle (41) with guide means (42) for the control unit (6),
and/or
- **in that** the receptacle (41) for the control unit (6) is designed, in particular open towards the bottom, such that any liquid present in the receptacle (41) can flow out of it,
and/or
- **in that** the device (1) is divided into several receiving spaces and each receiving space has a drain hole at its lowest point,
and/or
- **in that** a movable device of the mobile test unit (5) can be locked in place.

12. Testing method for testing a household appliance (2),
- in particular a fully automatic coffee machine (3),
- preferably as part of an endurance test over an extended period of time, using a device (1) according to one of the preceding claims,
- wherein the household appliance (2) is subjected to an automated test that is controlled or at least predetermined by a control unit (6),
and/or
- wherein the household appliance (2) is located on a mobile test unit (5) for the or one automated test, and the household appliance (2) and/or the mobile test unit is reversibly coupled to the docking station (4) and the test is carried out after the coupling is established,
- preferably wherein the control unit (6) automatically sets parameters of the test based on identification information that identifies the household appliance (2) to be tested and/or the mobile test unit (5) used for the test,
and/or
- wherein the household appliance (2) is reversibly coupled to the mobile test unit (5) and the mobile test unit (5) is reversibly coupled to the docking station (4).

13. Testing method according to claim 12,
- wherein the control unit (6) automatically monitors and/or documents the test,
- preferably by electronically storing metadata describing the test, in particular
- parameters of the test and/or
- identification information of the household appliance (2) and/or
- information about a responsible testing person,
and/or
- wherein the control unit (6) controls the test
- in that the control unit (6),
- preferably mediated via a coupling point (7) between the mobile test unit (5) and the docking station (4),
exerts a controlling influence on the household appliance (2),
- in particular to execute a function of the household appliance (2) typical of a usage situation,
and/or
- specifies the test in that the control unit (6),
- preferably mediated via a coupling point (7) between the mobile test unit (5) and the docking station (4),
transmits a test instruction necessary for performing the test to the mobile test unit (5) and/or the household appliance (2),
- in particular so that the household appliance (2) performs the test and/or the functions to be tested itself based on the test instruction.

14. Testing method according to claim 12 or 13, **characterized**
- **in that** an automated test that has not yet been completed is continued after disconnecting the mobile test unit (5) from a coupling point (7) of the docking station (4) and coupling the mobile test unit (5) to a coupling point (7) of the docking station (4), in particular automatically and/or without interruption,
and/or
- **in that** a disconnection of the mobile test unit (5) from the coupling point (7) of the docking station (4) is detected by the control unit (6), and the automated test is thereupon paused.

15. Testing method according to claims 12-14, **characterized**
- **in that** when the automated test is paused, the metadata describing the test is saved,
and/or
- **in that** a previously paused automated test is continued upon coupling the mobile test unit (5) to a coupling point (7) of the docking station (4).

## Revendications

1. Dispositif (1) destiné à contrôler un appareil ménager (2), en particulier une machine à café entièrement automatique (3), à l'aide d'un test, comprenant
- une unité de commande (6) configurée pour commander ou prédéfinir le test,
- dans lequel le test exécute une fonction de l'appareil ménager (2) qui correspond à une situation d'utilisation typique de l'appareil ménager (2) qui peut être répétée sur plusieurs cycles de travail en utilisant un milieu tel que par exemple de l'eau, du lait et/ou du café,
- dans lequel le dispositif (1) comprend au moins une station d'accueil fixe (4) et
au moins une unité de contrôle mobile (5),
- dans lequel l'unité de contrôle mobile (5) peut être couplée par le biais d'au moins un point de couplage (7) conçu au niveau de la station d'accueil (4) de telle sorte que le test puisse être réalisé sur l'unité de contrôle mobile (5) au niveau de l'appareil ménager (2) lorsque l'unité de contrôle mobile (5) est couplée au niveau de la station d'accueil (4) par le biais du point de couplage (7),
- et dans lequel l'unité de contrôle mobile (5) présente un moyen de portage (12) destiné à porter l'appareil ménager (2),
- dans lequel l'unité de contrôle mobile (5) est mobile dans au moins deux degrés de liberté de préférence en translation et/ou l'unité de contrôle mobile (5) et/ou le moyen de portage (12) peut être réglé/e en hauteur
et/ou
- dans lequel le dispositif (1) présente un actionneur (15) qui est configuré pour actionner une interface homme-machine (16) de l'appareil ménager (2) et/ou
- dans lequel la station d'accueil (4) et/ou l'unité de contrôle mobile (5) comprennent des capteurs surveillant le test qui peuvent être lus par l'unité de commande (6).

2. Dispositif (1) selon la revendication 1,
- dans lequel au moins deux unités de contrôle mobiles (5) présentent des corps de base correspondants,
- en particulier dans lequel les au moins deux unités de contrôle (5) disposent de châssis (9), unités de couplage (10) et/ou collecteurs (11) similaires,
et/ou
- dans lequel l'unité de commande (6) fait partie de l'unité de contrôle mobile (5) et/ou de la station d'accueil (4),
- en particulier dans lequel une unité de commande centrale de la station d'accueil (4) est en liaison et/ou peut être amenée en liaison avec une unité de commande (6) d'une unité de contrôle mobile (5).

3. Dispositif (1) selon l'une des revendications précédentes,
dans lequel le dispositif (1) comprend différentes unités de contrôle (5), en particulier avec des moyens de portage (12) concordant avec des appareils ménagers différents (2), qui peuvent être couplés à la station d'accueil (4) à chaque fois par le biais de l'au moins une unité de couplage (10),
- en particulier par le biais de plusieurs unités de couplage (10) conçues de manière similaire,
- en particulier de telle sorte que des appareils ménagers différents (2) peuvent être testés à chaque fois à l'aide d'une unité de contrôle (5) affectée au niveau de la station d'accueil (4), de préférence au niveau de chacune des unités de couplage (10) conçues de manière similaire,
et/ou dans lequel les différentes unités de contrôle (5) permettent des tests différents,
- en particulier de telle sorte qu'une fonctionnalité de test disponible momentanément du dispositif (1) puisse être facilement adaptée par le couplage et le découplage des unités de contrôle mobiles (5) et/ou par le remplacement des unités de contrôle (5) en conservant la station d'accueil (4),
et/ou dans lequel l'unité de contrôle mobile (5) comprend des raccords d'alimentation et/ou d'évacuation (25, 26) au niveau d'au moins deux, de manière préférée d'au moins trois, faces.

4. Dispositif (1) selon l'une des revendications précédentes,
- dans lequel un doigt d'actionneur (17) de l'actionneur (15) peut être déplacé en particulier de manière horizontale pour commander des éléments de l'interface homme-machine (16), en particulier de telle sorte que l'appareil ménager (2) effectue le test dans une position de fonctionnement typique, notamment debout sur ses pieds.

5. Dispositif (1) selon l'une des revendications précédentes, **caractérisé**
- **en ce que** l'actionneur (15) est actionné pneumatiquement,
de préférence dans lequel l'unité de commande (6) est configurée pour commander des vannes
et/ou
- **en ce qu'**une ouverture d'évacuation (30) est conçue au niveau de la face inférieure d'une unité de contrôle mobile (5)
et/ou
- **en ce que** l'ouverture d'évacuation (30) dans l'état d'utilisation d'une unité de contrôle mobile (5) vient se situer au niveau de la station d'accueil (4) au-dessus d'un moyen d'évacuation (27) du dispositif (1), en particulier d'une station d'accueil (4).

6. Dispositif (1) selon l'une des revendications précédentes, dans lequel l'unité de commande (6) est configurée pour soumettre l'appareil ménager (2) au test de manière automatique,
lorsque l'unité de contrôle mobile (5) est reliée à l'unité de couplage (19) de la station d'accueil (4),
- de préférence et pour documenter de manière automatique des métadonnées décrivant le test, en particulier
- des données de capteur et/ou
- des paramètres du test et/ou
- une information d'identification de l'appareil ménager (2) et/ou
- une information relative à une personne responsable du test,
et/ou
- dans lequel l'unité de commande (6) agit sur l'appareil ménager (2) respectivement accède à celui-ci pendant le test de manière commandée
et/ou
- dans lequel l'unité de commande (6) transmet à l'unité de contrôle mobile (5) et/ou l'appareil ménager (2), avant la réalisation du test, une instruction de contrôle nécessaire au test, de préférence par le biais du point de couplage (7),
- en particulier de telle sorte que l'appareil ménager (2) exécute / puisse exécuter lui-même le test à l'aide de l'instruction de contrôle.

7. Dispositif (1) selon l'une des revendications précédentes,
- dans lequel le point de couplage (7), qui est conçu de préférence sous la forme d'une unité de couplage (10, 19), présente
- une interface fluidique (20) pour la transmission d'un milieu, tel que par exemple de l'eau ou de l'air, entre la station d'accueil (4) et l'unité de contrôle mobile (5) et/ou
- une interface mécanique (21) pour la définition d'une position relative entre la la station d'accueil (4) et l'unité de contrôle mobile (5) et/ou
- une interface électrique (22) pour le transfert d'énergie électrique et/ou pour la transmission de données électroniques et/ou de signaux électriques.

8. Dispositif (1) selon la revendication précédente,
- dans lequel l'interface fluidique (20) est conçue à l'aide d'un élément de couplage (23) du point de couplage (7) de la station d'accueil (4) et l'élément de couplage (23) est conçu sous la forme d'un couplage de raccord fluidique de préférence à fermeture automatique,
- en particulier de telle sorte que, après le découplage d'une unité mobile (5), en interrompant l'interface fluidique (20), une sortie du milieu peut être évitée de manière sûre,
et/ou
dans lequel la station d'accueil (4) présente plusieurs points de couplage (7) qui sont distants les uns des autres de telle sorte qu'au moins deux, de préférence au moins trois, unités mobiles (5) peuvent être couplées simultanément au niveau de la station d'accueil (4) pour ainsi pouvoir réaliser de manière automatique plusieurs tests simultanément,
- en particulier dans lequel les distances sont choisies de telle sorte que des unités fonctionnelles mobiles supplémentaires (13) du dispositif (1),
- de préférence qui sont configurées pour fournir et/ou recevoir, des milieux fluides, en particulier réfrigérés, tels que par exemple du lait, de l'eau ou de l'air, ou qui sont équipées d'installations pour la maintenance du dispositif (1),
peuvent être déplacées directement de manière adjacente aux unités de contrôle (5) déjà couplées au niveau de la station d'accueil (4), en particulier pour fournir ainsi un milieu au niveau de l'appareil ménager (2) ou en recevoir à partir de celui-ci.

9. Dispositif (1) selon l'une des revendications précédentes,
**caractérisé**
- **en ce que** l'ouverture d'évacuation (30) et/ou le moyen d'évacuation (27) peuvent être recouvert(e)s d'un élément de fermeture (28, 29) conçu au niveau d'une unité de contrôle mobile (5) et/ou d'une station d'accueil (4),
- en particulier dans lequel l'élément de fermeture (28, 29) peut être maintenu de manière à recevoir l'ouverture d'évacuation (30) et/ou le moyen d'évacuation (27) à l'aide d'un moyen de serrage et/ou est à fermeture automatique
et/ou
- **en ce que** l'élément de fermeture (28, 29) est un curseur (30, 31)
et/ou
- **en ce qu'**un élément de fermeture (28, 29) conçu au niveau d'une unité de contrôle mobile (5) peut agir avec une station d'accueil (4)
et/ou un élément de fermeture (28, 29) conçu au niveau de la station d'accueil (4) peut agir avec l'unité de contrôle mobile (5) de telle sorte que l'élément de fermeture (28, 29) soit ouvert pendant la connexion de l'unité de contrôle mobile (5) au niveau de la station d'accueil (4) et/ou fermé pendant la déconnexion de l'unité de contrôle mobile (5) par rapport à la station d'accueil (4).

10. Dispositif (1) selon l'une des revendications précédentes,
**caractérisé**
- **en ce que**, au niveau d'une unité de contrôle mobile (5) ou dans celle-ci, une conduite d'évacuation (35) est disposée de sorte qu'un produit à évacuer puisse être transporté depuis une ouverture d'évacuation de l'appareil ménager (2) jusqu'à une ouverture d'évacuation (24, 30) de l'unité de contrôle mobile (5) et/ou d'un moyen d'évacuation (27) du dispositif (1), en particulier d'une station d'accueil (4)
et/ou
- **en ce que** le produit à évacuer est acheminé par gravité depuis une ouverture d'évacuation de l'appareil ménager (2) jusqu'à un moyen d'évacuation (27) du dispositif (1), en particulier d'une station d'accueil (4), en particulier est attrapé par le moyen d'évacuation (27)
et/ou
- **en ce que** la conduite d'évacuation (35) peut être interrompue,
- en particulier dans lequel le produit à évacuer attrapé au niveau du point d'interruption peut être déplacé par rapport à la zone (38) occupée par la conduite d'évacuation (35), de préférence avec un tiroir à poussée et/ou à pivotement (39).

11. Dispositif (1) selon l'une des revendications précédentes, **caractérisé**
- **en ce que** l'unité de commande (6) d'une unité de contrôle mobile (5) peut être enlevée,
- en particulier dans lequel l'unité de contrôle mobile (5) présente un réceptacle (41) avec des moyens de guidage (42) pour l'unité de commande (6)
et/ou
- **en ce que** le réceptacle (41) pour l'unité de commande (6) est conçu, en particulier ouvert vers le bas, de telle sorte que le fluide présent dans le réceptacle (41) puisse d'écouler de celui-ci
et/ou
- **en ce que** le dispositif (1) est divisé en plusieurs espaces de réceptacle et chaque espace de réceptacle dispose d'un trou d'écoulement au niveau de son point le plus bas,
et/ou
- **en ce qu'**une installation mobile de l'unité de contrôle mobile (5) peut être détectée.

12. Procédé de contrôle destiné à tester un appareil ménager (2),
- en particulier une machine à café entièrement automatique (3),
- de préférence dans le cadre d'un test de durée sur le long terme,
en utilisant un dispositif (1) selon l'une des revendications précédentes,
- dans lequel l'appareil ménager (2) est soumis à un test de manière automatique qui est commandé ou au moins prédéfini par une unité de commande (6)
et/ou
- dans lequel l'appareil ménager (2) se trouve sur une unité de contrôle mobile (5) pour un ou le test automatique et l'appareil ménager (2) et/ou l'unité de contrôle mobile est couplé/e de manière réversible avec la station d'accueil (4) et le test est exécuté une fois que le couplage est établi,
- de préférence dans lequel l'unité de commande (6) ajuste de manière automatique des paramètres du test à l'aide d'une information d'identification qui identifie l'appareil ménager (2) à tester et/ou l'unité de contrôle mobile (5) utilisée pour le test,
et/ou
- dans lequel l'appareil ménager (2) est couplé de manière réversible au niveau de l'unité de contrôle mobile (5) et l'unité de contrôle mobile (5) est couplé de manière réversible au niveau de la station d'accueil (4).

13. Procédé de contrôle selon la revendication 12,
- dans lequel l'unité de commande (6) surveille et/ou documente le test de manière automatique,
- de préférence par l'enregistrement électronique de métadonnées décrivant le test, en particulier
- des paramètres du test et/ou
- une information d'identification de l'appareil ménager (2) et/ou
- une information relative à une personne responsable du test et/ou
- dans lequel l'unité de commande (6)
- en commandant le test où l'unité de commande (6),
- de préférence transmet par le biais d'un point de couplage (7) entre l'unité de contrôle mobile (5) et la station d'accueil (4),
agit sur l'appareil ménager (2) de manière commandée,
- en particulier pour exécuter une fonction de l'appareil ménager (2) typique pour une situation d'utilisation,
et/ou
- en prédéfinissant le test, où l'unité de commande (6),
- de préférence transmet par le biais d'un point de couplage (7) entre l'unité de contrôle mobile (5) et la station d'accueil (4),
transmet à l'unité de contrôle mobile (5) et/ou l'appareil ménager (2) une instruction de contrôle nécessaire à la réalisation du test,
- en particulier de telle sorte que l'appareil ménager (2) exécute lui-même le test et/ou les fonctions à tester à l'aide de l'instruction de contrôle.

14. Procédé de contrôle selon les revendications 12 ou 13, **caractérisé**
- **en ce qu'**un test automatique non encore finalisé après le découplage de l'unité de contrôle mobile (5) par rapport à un point de couplage (7) de la station d'accueil (4) et le couplage de l'unité de contrôle mobile (5) au niveau d'un point de couplage (7) de la station d'accueil (4), est poursuivi, en particulier de manière automatique et/ou sans interruption
et/ou
- **en ce qu'**un découplage de l'unité de contrôle mobile (5) par rapport au point de couplage (7) de la station d'accueil (4) est reconnu par l'unité de commande (6), à la suite de quoi le test automatique est arrêté.

15. Procédé de contrôle selon les revendications 12 à 14, **caractérisé**
- **en ce que**, lors d'un arrêt du test automatique, un enregistrement des métadonnées décrivant le test est effectué,
et/ou
- **en ce qu'**un test automatique arrêté préalablement lors d'un couplage de l'unité de contrôle mobile (5) au niveau d'un point de couplage (7) de la station d'accueil (4) est poursuivi.
